# EUROPEAN PATENT SPECIFICATION

(11) **EP 4 112 466 B1**
(45) Date of publication and mention of the grant of the patent: **29.10.2025**
(21) Application number: 22181143.3
(22) Date of filing: 27.06.2022
(51) Int. Cl.: B64D 11/04

(54) **AUTOMATED CART SYSTEMS AND METHODS FOR AN INTERNAL CABIN OF A VEHICLE**
AUTOMATISIERTE WAGENSYSTEME UND -VERFAHREN FÜR EINE INNENKABINE EINES FAHRZEUGS
SYSTÈMES ET PROCÉDÉS DE CHARIOT AUTOMATISÉ POUR UNE CABINE INTERNE DE VÉHICULE

(30) Priority: 30.06.2021 US 202163216561 P
(43) Date of publication of application: 04.01.2023
(73) Proprietor: The Boeing Company, Arlington, VA 22202 (US)
(72) Inventor: VANDEWALL, Cynthis Anne, CHICAGO, 60606-1596 (US); BOWEN, Jared Arthur, CHICAGO, 60606-1596 (US); GRACIELA, Anabel, CHICAGO, 60606-1596 (US); DEBRECHT, Sebra, CHICAGO, 60606-1596 (US)
(74) Representative: Arnold & Siedsma

(56) References cited:
- US-A1- 2004 186 760
- US-A1- 2013 120 163
- US-A1- 2014 021 690
- US-A1- 2015 057 796
- US-A1- 2019 009 910
- US-A1- 2019 311 318
- US-A1- 2020 122 836
- ANONYMOUS: "Bin-e", 23 March 2021 (2021-03-23), XP055973609, Retrieved from the Internet <URL:https://www.construction21.org/infrastructure/h/bin-e.html> [retrieved on 20221021]
- ANONYMOUS: "CleanRobotics: Innovative solutions for a sustainable tomorrow", 12 July 2013 (2013-07-12), XP055973611, Retrieved from the Internet <URL:https://cleanrobotics.com/> [retrieved on 20221021]

## Description

### BACKGROUND OF THE DISCLOSURE

Vehicles such as commercial aircraft are used to transport passengers between various locations. During a flight, an attendant may periodically pass through an internal cabin to distribute refreshments. For example, an attendant may push a galley cart through an aisle of an internal cabin. The galley cart retains beverages and snacks, for example. Passengers may select certain beverages and snacks from the attendant.

US 2019/311318 A1, in accordance with its abstract, states a system for stock management for on-board catering for a vehicle, in particular for an aircraft, includes a galley which is provided with a control unit for controlling the galley, wherein the control unit is designed to make available stock management data of the galley; a service unit for transporting supplies within the vehicle, wherein the stock management data comprise a stock record of the supplies transported with the service unit; and at least one operator control element which is communicatively connected to the control unit of the galley via a wireless data connection and is designed to record removal of a supply item from the service unit and/or reception of a supply item into the service unit, and to bring about updating of the stock record of the transported supplies on the basis thereof.

US 2015/057796 A1, in accordance with its abstract, states snack and food dispensers on passenger transport vehicles, particularly aircraft, that will ensure fair distribution of self-serve snacks provided between meals and/or during flight in an organized, systematic, safe, and sanitary manner as well as allow a more accessible means for buying "Food for Purchase" items with less crew dependence for serving.

US 2004/186760 A1, in accordance with its abstract, states systems and methods for transacting credit card payments, and reconciling inventory and cash transactions on moving vehicles, such as, in one embodiment, a passenger aircraft in-flight. The system employs a portable device for completing remote point of sale (POS) transactions. In one embodiment, the portable device is a personal digital assistant (PDA). The system includes an Internet portal in communication with a database for entering and storing pre-sale and post-sale transaction and inventory information, which may be used for reconciliation purposes, among other things.

US 2013/120163 A1, in accordance with its abstract, states a method and system for displaying information on an electrical display unit in an aircraft cabin including a generating unit for generating at least one signal which clearly identifies the information, a first acquiring unit for wirelessly acquiring the at least one signal and a control unit for controlling the display unit on the basis of the at least one signal. The system may also have a second acquiring unit for acquiring departure and/or arrival location information relating to a flight and a third acquiring unit for acquiring passenger information.

However, manually maneuvering carts and delivering items therefrom poses certain drawbacks. For example, attendants and passengers may not be aware of the current inventory of various items during a flight, nor if there will be suitable inventory for a future flight. Additionally, manually inspecting a cart for desired items requested by passengers can be inefficient. For example, a passenger may request an item only to find out that the item is no longer available after the attendant searches the cart. Additionally, there can be ergonomic issues with heavy carts and safety issues with runaway carts that are improperly stowed. Further, sorting trash and waste stored within a cart can be a time consuming task that is susceptible to human error.

Also, known carts provide little to no opportunity for passengers to be able to customize orders. Additionally, access to items such as food and beverages may be limited to specific times during a flight, and service can be slow and limited with no options available for specific food restrictions and preferences.

### SUMMARY OF THE DISCLOSURE

A need exists for a system and a method for efficiently and effectively providing items to passengers aboard a vehicle during a trip. Further, a need exists for improved cart systems and methods, such as can be used within an internal cabin of a vehicle.

With those needs in mind, certain examples of the present disclosure provide a cart system for an internal cabin of a vehicle according to claim 1. The cart system includes, inter alia, a housing, one or more wheels coupled to the housing, and a user interface disposed on a portion of the housing. The user interface is configured to allow an individual to view inventory and select one or more items of the inventory.

In at least one example, the cart system also includes one or more inventory compartments configured to store the inventory, and one or more inventory sensors configured to detect the one or more items of the inventory.

In at least one example, the cart system also includes an item dispensing sub-system configured to deliver the one or more items of the inventory for presentation to the individual. For example, the item dispensing sub-system includes one or more actuators operatively coupled to one or more delivery members.

The cart system also includes one or more waste compartments, and one or more waste sensors configured to detect a type of waste deposited into the one or more waste compartments. As a further example, a sorter is configured to automatically sort waste into the one or more waster compartments.

In at least one example, the cart system also includes one or more actuators operatively coupled to the one or more wheels. As an example, the one or more actuators are configured to automatically move the cart system within the internal cabin.

In at least one example, the user interface is removably coupled to the housing.

In at least one example, the user interface includes a display screen showing a passenger information selection area and an inventory selection area.

Certain examples of the present disclosure provide a method for an internal cabin of a vehicle. The method includes showing, via a user interface disposed on a portion of a housing having one or more wheels coupled thereto, inventory of items; and allowing selection, via the user interface, of one or more of the items of the inventory.

Certain examples of the present disclosure provide a vehicle including an internal cabin, and a cart system configured to move within the internal cabin, as described herein.

Further, the disclosure also relates to a cart system for an internal cabin of a vehicle, comprising a housing, one or more wheels coupled to the housing and a user interface disposed on a portion of the housing, wherein the user interface is configured to allow an individual to view inventory and select one or more items of the inventory.

The cart system can further comprise one or more inventory compartments configured to store the inventory and one or more inventory sensors configured to detect the one or more items of the inventory.

The cart system can further comprise an item dispensing sub-system configured to deliver the one or more items of the inventory for presentation to the individual.

The item dispensing sub-system comprises one or more actuators operatively may be coupled to one or more delivery members.

The cart system further comprises one or more waste compartments; and one or more waste sensors configured to detect a type of waste deposited into the one or more waste compartments.

The cart system may further comprise a sorter configured to automatically sort waste into the one or more waster compartments.

The cart system can further comprise one or more actuators operatively coupled to the one or more wheels.

The one or more actuators may be configured to automatically move the cart system within the internal cabin.

The user interface can be removably coupled to the housing.

The user interface may comprise a display screen showing a passenger information selection area and an inventory selection area.

The disclosure also relates to a method for an internal cabin of a vehicle, comprising showing, via a user interface disposed on a portion of a housing having one or more wheels coupled thereto, inventory of items; and allowing selection, via the user interface, of one or more of the items of the inventory.

The method may further comprise storing, within one or more inventory compartments of the housing, the inventory; and detecting, by one or more inventory sensors, the one or more items of the inventory.

The method can further comprise delivering, by an item dispensing sub-system, the one or more items of the inventory for presentation.

The method can further comprise sensing, by one or more waste sensors, a type of waste deposited into one or more waste compartments of the housing.

The method can further comprise automatically sorting waste into the one or more waster compartments.

The method can further comprise operatively coupling one or more actuators to the one or more wheels.

The method can further comprise automatically moving, by the one or more actuators, a cart system within an internal cabin of a vehicle.

The method can further comprise removing the user interface from the housing.

The showing can comprise showing, on a display screen of the user interface, a passenger information selection area and an inventory selection area.

The disclosure also relates to a vehicle according to claim 10. In an illustrative example, the vehicle comprises an internal cabin; and a cart system configured to move within the internal cabin, wherein the cart system comprises: a housing; one or more wheels coupled to the housing; one or more actuators operatively coupled to the one or more wheels, a user interface disposed on a portion of the housing, wherein the user interface is configured to allow an individual to view inventory and select one or more items of the inventory; one or more inventory compartments configured to store the inventory; one or more inventory sensors configured to detect the one or more items of the inventory; an item dispensing sub-system configured to deliver the one or more items of the inventory for presentation to the individual; one or more waste compartments; one or more waste sensors configured to detect a type of waste deposited into the one or more waste compartments; and a sorter configured to automatically sort waste into the one or more waster compartments.

### BRIEF DESCRIPTION OF THE DRAWINGS

Figure 1 illustrates a front perspective view of an aircraft, according to an example of the present disclosure.
Figure 2A illustrates a top plan view of an internal cabin of an aircraft, according to an example of the present disclosure.
Figure 2B illustrates a top plan view of an internal cabin of an aircraft, according to an example of the present disclosure.
Figure 3 illustrates an interior perspective view of an internal cabin of an aircraft, according to an example of the present disclosure.
Figure 4 illustrates a schematic block diagram of a cart system, according to an example of the present disclosure.
Figure 5 illustrates a schematic block diagram of a control unit, according to an example of the subject disclosure.
Figure 6 illustrates a first perspective side view of a cart system, according to an example of the present disclosure.
Figure 7 illustrates a front view of the cart system of Figure 6.
Figure 8 illustrates a second perspective side view of the cart system of Figure 6.
Figure 9 illustrates a perspective top view of the cart system, according to an example of the present disclosure.
Figure 10 illustrates a perspective top view of the cart system having an item of inventory presented by an item dispensing sub-system, according to an example of the present disclosure.
Figure 11 illustrates a perspective top view of a user interface on a housing of the cart system, according to an example of the present disclosure.
Figure 12 illustrates an internal view of a portion of the cart system, according to an example of the present disclosure.
Figure 13 illustrates a flow chart of a method for an internal cabin of a vehicle, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As food and beverage delivery systems advance, cart systems used to store passenger meals and other in-flight items can include temperature controlled chambers used to warm or cool the items, as desired, before boarding. In at least one example, the cart systems include a user interface having a screen that provides individuals with inventory data allowing them to correctly select pre-ordered items. Inventory can then be instantly updated creating more efficient service.

In at least one example, the cart system is configured to automatically dispense and present selected items, automatically assist users, and reduce push/pull effort of heavy carts.

In at least one example, the cart systems are adaptable to other uses including waste carts with all-in-one self-sorting or branded partnerships, promotion of new products on screen showing inventory in each cart and galley compartment (mobile panels, flight attendant panels, detached display that can connect to cart).

In at least one example, the cart systems include automated item dispensing systems.

In at least one example, the cart systems can include a full handle that helps flight attendants maneuver the cart systems better and wheels that have sensors for altitude and attitude for better breaking and maneuvering.

The cart systems can be connected to network systems that provide attendants important information about the passengers and their orders.

The cart systems can also include recycling compartment(s) for waste (for example, two or more internal compartments configured to sorting and storing waste for recycling). Waste sorting sensors can automatically sort paper, aluminum, and plastic into separate compartments.

The cart systems can also be equipped with a wheel assist to reduce the physical exertion needed to push the carts up and down aisles. The cart systems can be sized and shaped according to the existing standard trolley dimensions so they can be fit into existing compartments within galleys.

In at least one example, the wheels can be motorized. In this manner, the cart systems can be self-propelled, thereby helping attendants maneuver the cart systems.

Certain examples of the present disclosure provide a cart system for an internal cabin of a vehicle. The cart system includes a housing, user interface having a screen supported by the housing for displaying inventory of items stored in the housing and/or a galley of a vehicle, an automated food and beverage dispensing sub-system, powered wheels controlled based on sensed data of altitude and attitude, a communication device for wireless communication to other systems in the cabin (for example, for data related to passengers, preferences, orders, etc.), and a control unit operatively coupled to various components, and configured to control operation of the cart system. The user interface can be removable. Alternatively, a crew member can attach to the cart system an existing smart mobile device such as a company phone or tablet. In at least one example, a recycling compartment(s) is supported in the housing for collecting/separating waste onboard, and includes waste sorting sensors for automatically sorting recyclables and waste in separate compartments. The control unit can control the powered wheels based on usage requirements to reduce the physical exertion needed to push the cart.

In at least one example, the cart system can include proximity sensors (or other location sensing system) for purposes of fully or partially autonomous ground movement of the cart without the assistance from a person (or some assistance/oversight from a person). This can potentially replace the need for one or more crew members to serve passengers and/or collect waste.

In at least one example, the cart system can include artificial intelligence features (such as via the control unit) to predict inventory, power usage, expected waste, and flight related aspects such as turbulence, altitude, attitude, flight time, etc. for purposes of controlling the powered wheels, inventory management, passenger preferences, etc.

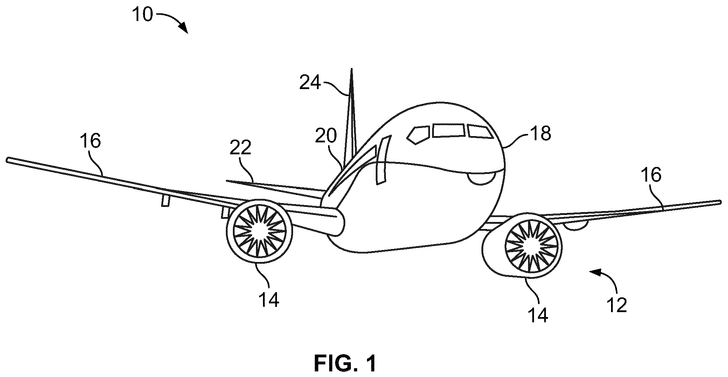

Figure 1 illustrates a front perspective view of a vehicle, such as an aircraft 10, according to an example of the present disclosure. The aircraft 10 includes a propulsion system 12 that includes two engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin, which may include a cockpit, one or more work sections (for example, galleys, personnel carry-on baggage areas, and the like), one or more passenger sections (for example, first class, business class, and coach sections), and an aft section. Each of the sections may be separated by a cabin transition area. Overhead stowage bin assemblies are positioned throughout the internal cabin.

Alternatively, instead of an aircraft, examples of the present disclosure may be used with various other vehicles, such as automobiles, buses, locomotives and train cars, seacraft, spacecraft, and the like.

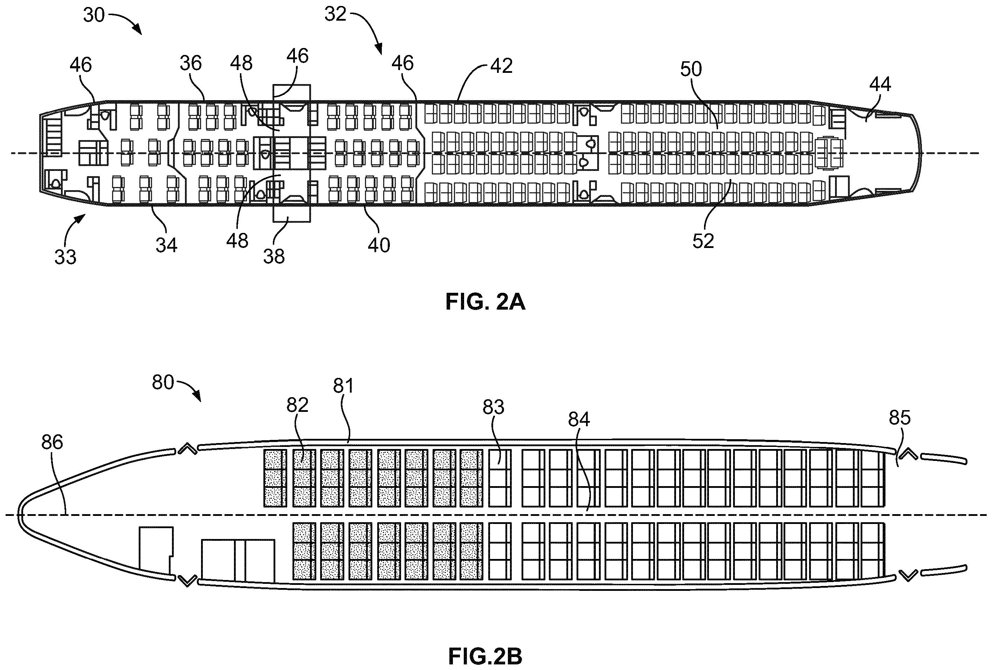

Figure 2A illustrates a top plan view of an internal cabin 30 of an aircraft, according to an example of the present disclosure. The internal cabin 30 may be within a fuselage 32 of the aircraft. For example, one or more fuselage wall members may define the internal cabin 30. The internal cabin 30 includes multiple sections, including a front section 33, a first class section 34, a business class section 36, a front galley station 38, an expanded economy or coach section 40, a standard economy or coach section 42, and an aft section 44, which may include multiple lavatories and galley stations. It is to be understood that the internal cabin 30 may include more or less sections than shown. For example, the internal cabin 30 may not include a first class section, and may include more or less galley stations than shown. Each of the sections may be separated by a cabin transition area 46, which may include class divider assemblies between aisles 48.

As shown in Figure 2A, the internal cabin 30 includes two aisles 50 and 52 that lead to the aft section 44. Optionally, the internal cabin 30 may have less or more aisles than shown. For example, the internal cabin 30 may include a single aisle that extends through the center of the internal cabin 30 that leads to the aft section 44.

A cart system can be used within the internal cabin 30. The cart system can be configured to be stored within a compartment within a galley. Passengers can select items from the cart system, dispose waste into the cart system, and the like, as described herein.

Figure 2B illustrates a top plan view of an internal cabin 80 of an aircraft, according to an example of the present disclosure. The internal cabin 80 may be within a fuselage 81 of the aircraft. For example, one or more fuselage wall members may define the internal cabin 80. The internal cabin 80 includes multiple sections, including a main cabin 82 having passenger seats 83, and an aft section 85 behind the main cabin 82. It is to be understood that the internal cabin 80 may include more or less sections than shown.

The internal cabin 80 may include a single aisle 84 that leads to the aft section 85. The single aisle 84 may extend through the center of the internal cabin 80 that leads to the aft section 85. For example, the single aisle 84 may be coaxially aligned with a central longitudinal plane 86 of the internal cabin 80.

A cart system can be used within the internal cabin 80. The cart system can be configured to be stored within a compartment within a galley. Passengers can select items from the cart system, dispose waste into the cart system, and the like, as described herein.

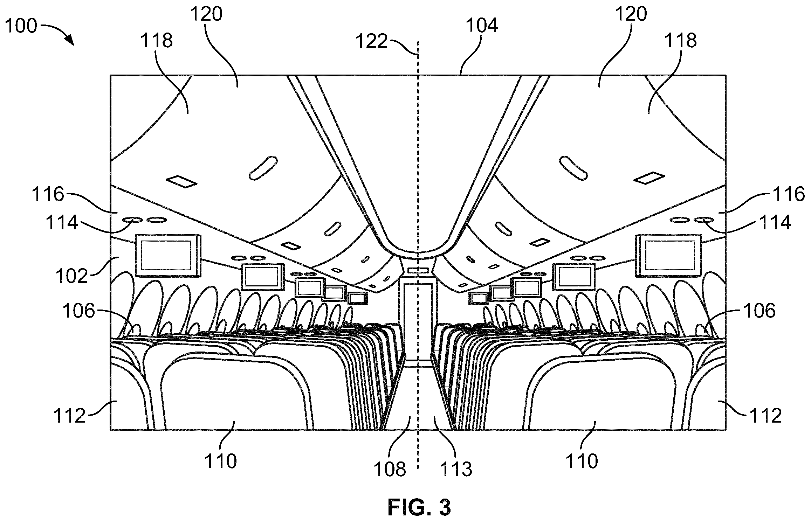

Figure 3 illustrates an interior perspective view of an internal cabin 100 of an aircraft, according to an example of the present disclosure. The internal cabin 100 includes outboard wall members 102 and a ceiling 104, which may include a plurality of ceiling panels. Windows 106 may be formed within the outboard wall members 102. A floor member 108 supports rows of seats 110. As shown in Figure 3, a row 112 may include two seats 110 on either side of an aisle 113. However, the row 112 may include more or less seats 110 than shown. Additionally, the internal cabin 100 may include more aisles than shown.

Passenger service unit (PSUs) 114 are secured between an outboard wall member 102 and the ceiling 104 on either side of the aisle 113. The PSUs 114 extend between a front end and rear end of the internal cabin 100. For example, a PSU 114 may be positioned over each seat 110 within a row 112. Each PSU 114 may include a housing 116 that generally contains passenger air outlets, reading lights, an oxygen supply system (such as an oxygen bag drop panel), an attendant call button, and other such controls over each seat 110 (or groups of seats) within a row 112.

Overhead stowage bin assemblies 118 are secured to the structure proximate to the ceiling 104 and/or the outboard wall member 102 above and inboard from the PSU 114 on either side of the aisle 113. The overhead stowage bin assemblies 118 are secured over the seats 110. The overhead stowage bin assemblies 118 extend between the front and rear end of the internal cabin 100. Each stowage bin assembly 118 may include a pivot bin or bucket 120 pivotally secured to a strongback (hidden from view in Figure 3). The overhead stowage bin assemblies 118 may be positioned above and inboard from lower surfaces of the PSUs 114. The overhead stowage bin assemblies 118 are configured to be pivoted open in order to receive passenger carry-on baggage and personal items, for example.

As used herein, the term "outboard" means a position that is further away from a central longitudinal plane 122 of the internal cabin 100 as compared to another component. The term "inboard" means a position that is closer to the central longitudinal plane 122 of the internal cabin 100 as compared to another component. For example, a lower surface of a PSU 114 may be outboard in relation to a stowage bin assembly 118.

A cart system can be used within the internal cabin 100. The cart system can be configured to be stored within a compartment within a galley. Passengers can select items from the cart system, dispose waste into the cart system, and the like, as described herein.

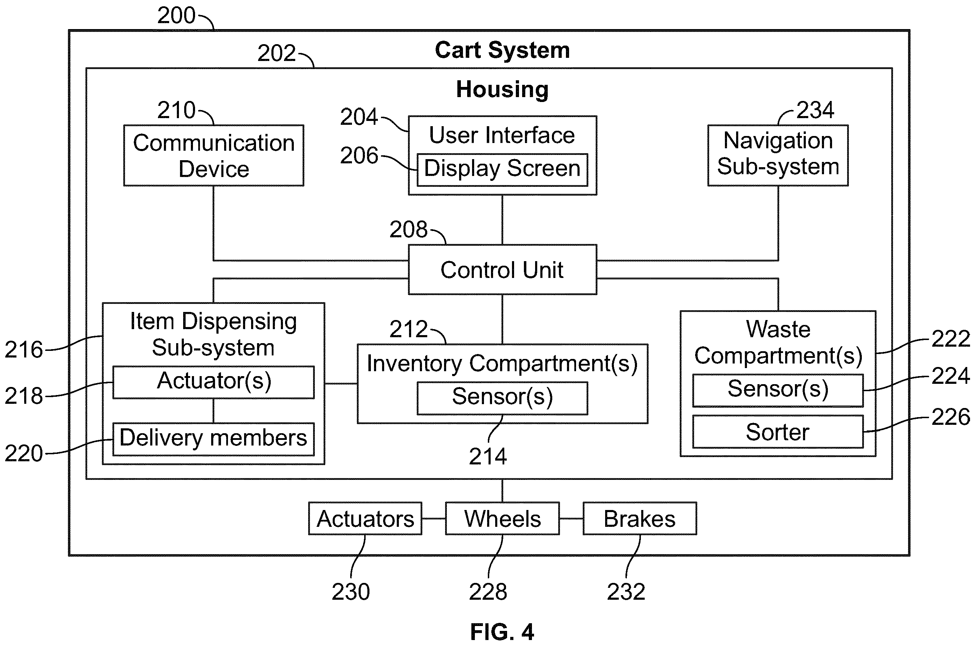

Figure 4 illustrates a schematic block diagram of a cart system 200, according to an example of the present disclosure. The cart system 200 includes a housing 202, such as can be defined by a base, one or more outer walls, an upper panel, and/or the like. A user interface 204 is disposed on the housing 202, such as on a front and/or top panel. In at least one example, the user interface 204 includes a monitor or the like that allows information to be electronically displayed. For example, the user interface 204 includes a display screen 206. In at least one example, the user interface 204, including the display screen 206, can be a touchscreen interface configured to electrically show information thereon, and allow for touchscreen selection.

The user interface 204 is in communication with a control unit 208, such as through one or more wired or wireless connections. The control unit 208 is configured to control various aspects of the cart system 200, as described herein.

The control unit 208 is also in communication with a communication device 210, such as through one or more wired or wireless connections. The communication device 210 can be on or more of an antenna, a transceiver, a transmitter, a receiver, and/or the like that allows the control unit 208 to wirelessly communicate with various remote systems, such as within a vehicle, outside of a vehicle, or the like. Alternatively, the cart system 200 does not include the communication device 210.

The housing 202 also includes one or more inventory compartments 212 configured to store various items of inventory, such as food items, beverages, and/or the like. One or more sensors 214 (for example, inventory sensors) are disposed within the one or more inventory compartments 212. The sensor(s) 214 can be optical devices, such as cameras, bar code readers, infrared imaging devices, ultrasonic sensors, and/or the like that are configured to detect the items of inventory within the inventory compartment(s) 212. In at least one example, the control unit 208 is in communication with the sensor 214, such as through one or more wired or wireless connections. As such, the control unit 208 is able to monitor and determine the items of inventory within the inventory compartment(s) 212 through communication with the sensors 214. Alternatively, the cart system 200 does not include the sensor 214.

The housing 202 also includes an item dispensing sub-system 216, such as within at least a portion of the inventory compartment(s) 212. The item dispensing sub-system 216 is configured to deliver one or more selected items of the inventory for presentation to an individual who selected such item(s). The item dispensing sub-system 216 includes one or more actuators 218 (such as motors) operatively coupled to one or more delivery members 220 (such as one or more arms, conveyors, clasps, hooks, chutes, tubes, and/or the like). The actuators 218 and delivery members 220 are configured to engage one or more selected items of inventory for delivery outside of the housing. For example, the item dispensing sub-system 216 is configured to pick up a selected item of inventory within the inventory compartment(s) 212, and move the selected item of inventory outside of the housing 202, such as onto an upper panel to be presented to an individual who selected the item. The control unit 208 is in communication with the item dispensing sub-system 216, such as through one or more wired or wireless connections, and is configured to control the item dispensing sub-system 216 based on a selection of item of inventory. Alternatively, the cart system 200 does not include the item dispensing sub-system 216.

The housing 202 also includes one or more waste compartments 222. One or more sensors 224 (for example, waste sensors) can be disposed proximate (such as at) an inlet to the waste compartments 222. The sensor(s) 224 are configured to detect a type of waste deposited into the one or more waste compartments 222. For example, the sensors 224 can be weight sensors, pressure sensors, optical sensors, and/or the like that are configured to detect and identify an item of waste that is deposited into the waste compartment(s) 222. The sensors 224 are in communication with the control unit 208, such as through one or more wire or wireless connections. The control unit 208 can also be in communication with a sorter 226 (such as a moveable shunt, arm, chute, and/or the like), such as through one or more wired or wireless connections. The sorter 226 is configured to automatically sort deposited waste into an appropriate waste compartment 222. As an example, the housing 202 includes three waste compartments, one for paper, one or aluminum, and one for non-recyclable waste. The control unit 208 determines the type of waste deposited into the waste compartments 222 through the sensor 224, and operates the sorter 226 to deposit the deposited waste into the appropriate waste compartment 222. Alternatively, the cart system 200 may not include the waste compartment(s) 222, the sensors 224, and/or the sorter 226.

The cart system 200 also include one or more wheels 228, which are configured to provide rolling support on a surface, such as a floor of an internal cabin. One or more of the wheels 228 can be operatively coupled to one or more actuators 230 (such as motors) and/or brakes 232. The actuators 230 are configured to provide propulsion to the wheels 228, so that the cart system 200 can be automatically moved (or at least assist in manually moving) within an environment, such as an internal cabin of a vehicle. The control unit 208 can be in communication with the actuators 230 and/or the brakes 232, such as via one or more wired or wireless connections, to control operation thereof. Optionally, the control unit 208 is not configured to control operation of the actuators 230 and/or the brakes 232. Also, alternatively, the wheels 228 are not operatively coupled to the actuators 230 and/or the brakes 232.

In operation, the control unit 208 is configured to automatically determine the items of inventory within the inventor compartment(s) 212 via the sensor(s) 214. Accordingly, the control unit 208 can then send one or more signals to the user interface 204 to display the available inventory on the display screen 206 to an individual. The control unit 208 can also be in communication with an inventory within a galley, such as via the communication device 210, and configured to display available items stored within the galley on the display screen 206.

The individual is able to view the items of inventory via the user interface 204. Further, the individual is able to select one or more items of inventory through the user interface 204.

The user interface 204 can be removable. In at least one other example, an individual (such as a passenger or crew member) can communicate with the control unit 208 via an existing handheld device, such as a smart phone or table. The handheld device can then provide the user interface 204.

In response to an individual selecting an item of inventory within the inventory compartment(s) 212, the control unit 208 operates the item dispensing sub-system 216 to acquire the item, and move the item to a presentation area (such as on a top panel of the housing 202) for the individual. The control unit 208 can then update the inventory (based on the selected item(s)), thereby improving service efficiency.

In at least one example, the control unit 208 can control the actuators 230 and/or the brakes 232 operatively coupled to the wheels 228 to automatically move the cart system 200 within an internal cabin, and/or assist with movement thereof. That is, the control unit 208 can control the powered wheels based on usage requirements to reduce the physical exertion needed to push the cart.

In at least one example, the control unit 208 is in communication with a navigation sub-system 234 (such as a local positioning system, a global positioning system, or the like) that is configured to determine the location of the cart system 200 within an environment, such as an internal cabin of a vehicle. The control unit 208 is configured to control operation of the actuators 230 and/or the brakes 232 to automatically move the cart system 200 within the environment based on the detected position of the cart system 200, as determined by the navigation sub-system 234. Optionally, the cart system 200 may not include the navigation sub-system 234. In at least one example, the cart system can include proximity sensors (or other location sensing system) for purposes of fully or partially autonomous ground movement of the cart system 200 without the assistance from a person (or some assistance/oversight from a person).

In at least one example, the control unit 208 can control the wheels 228, via the actuator(s) 230 and/or the brake(s) 232, based on sensed data of altitude and attitude. For example, the control unit 208 can be in communication with a flight computer of an aircraft, such as through the communication device 210, and operate the actuators 230 and/or the brakes based on altitude and attitude as monitored by the flight computer. In at least one example, the cart system 200 can include a full handle that helps flight attendants maneuver the cart system 200 better and the wheels 228 can further include sensors for determining altitude and attitude (instead of the control unit 208 controlling through communication with a flight computer, for example) for better breaking and maneuvering.

In at least one example, the waste compartment(s) 222 can be configured for collecting and separating waste. The control unit 208 is in communication with the sensors 224 and the sorter 226 to automatically sort waste, such as recyclables, into separate compartments.

In at least one example, the cart system 200 can include artificial intelligence features (such as via the control unit 208) to predict inventory, power usage, expected waste, and flight related aspects such as turbulence, altitude, attitude, flight time, etc. for purposes of controlling the powered wheels, inventory management, passenger preferences, etc. For example, the control unit 208 can be in communication with a database, memory, and/or the like that stores passenger information. The control unit 208 can predict inventory based on data from previous trips of passengers scheduled for a trip. The control unit 208 can determine inventory for a trip (such as a flight of an aircraft) based on previous orders of the passengers. Further, the control unit 208 can analyze passenger and crew behavior/movements to better configure inventory for future trips. Optionally, the cart system may not include the artificial intelligence features.

The cart system 200 can be connected to network systems, such as via the communication device 210, that provide individuals information about the passengers and their orders.

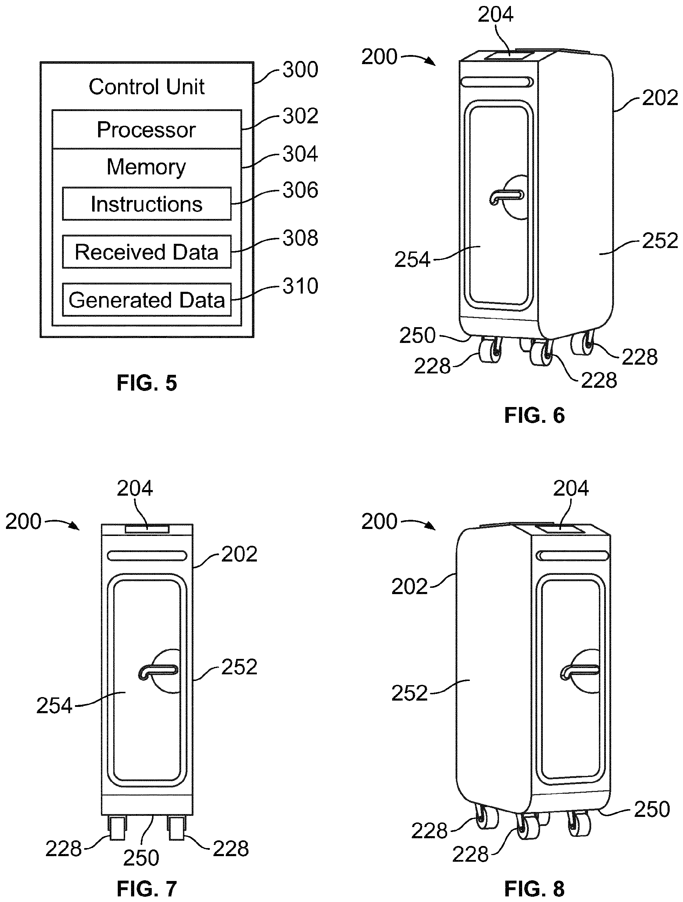

Figure 5 illustrates a schematic block diagram of a control unit 300, according to an example of the subject disclosure. In at least one example, the control unit 208 (shown in Figure 4) is configured as shown in Figure 5. In at least one example, the control unit 300 includes at least one processor 302 in communication with a memory 304. The memory 304 stores instructions 306, received data 308, and generated data 310. The control unit 300 shown in Figure 5 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 208 may be or include one or more processors that are configured to control operation, as described herein.

The control unit 208 is configured to execute a set of instructions that are stored in one or more data storage units or elements (such as one or more memories), in order to process data. For example, the control unit 208 may include or be coupled to one or more memories. The data storage units may also store data or other information as desired or needed. The data storage units may be in the form of an information source or a physical memory element within a processing machine.

The set of instructions may include various commands that instruct the control unit 208 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 208. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 208 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 6 illustrates a first perspective side view of the cart system 200, according to an example of the present disclosure. Figure 7 illustrates a front view of the cart system 200 of Figure 6. Figure 8 illustrates a second perspective side view of the cart system 200 of Figure 6. Referring to Figures 6-8, the housing 202 includes a base 250. The wheels 228 are moveably coupled to a lower portion of the base 250. Outer walls 252 upwardly extend from the base 250. A door 254 is moveably coupled to at least one of the outer walls 252, such as a front panel. The door 254 is moveable between open and closed positions. When the door 254 is in the open position, the inventory compartment(s) 212 and/or the waste compartment(s) 222 are accessible. The user interface 204 is disposed on an outer surface of the housing 202, such as on a top panel.

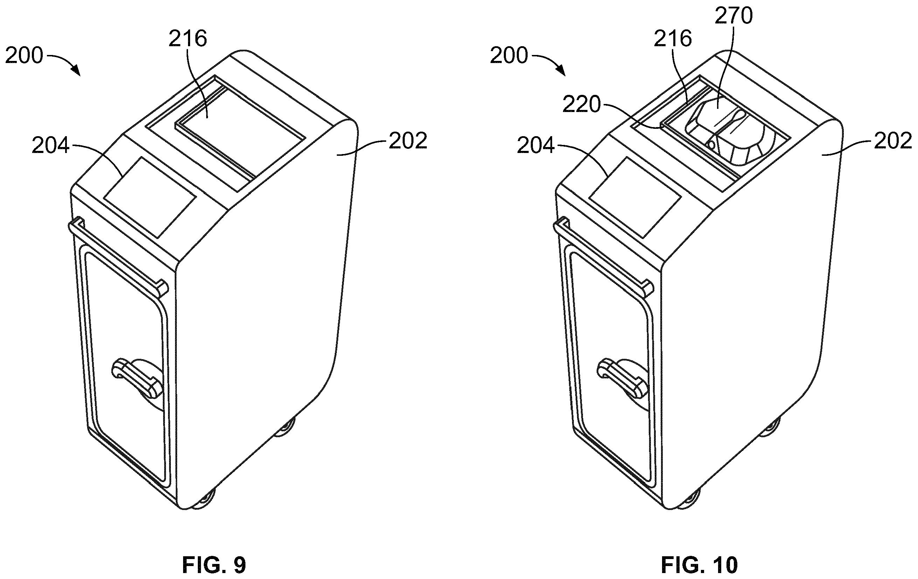

Figure 9 illustrates a perspective top view of the cart system 200, according to an example of the present disclosure. Figure 10 illustrates a perspective top view of the cart system 200 having an item 270 of inventory presented by the item dispensing sub-system 216, according to an example of the present disclosure. As shown, the delivery member 220 (such as a moveable tray) provides the item 270 for presentation such as proximate to a top panel of the housing 202.

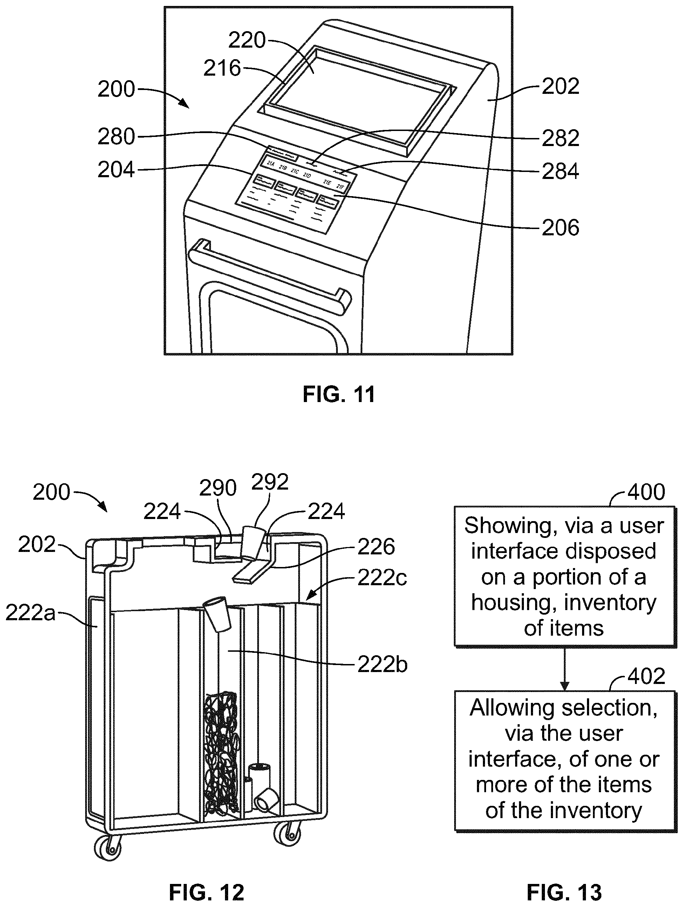

Figure 11 illustrates a perspective top view of the user interface 204 on the housing 202 of the cart system 200, according to an example of the present disclosure. The user interface 204 can be on a front panel and/or top panel of the housing 202. Optionally, the user interface 204 can be at other locations than shown.

Referring to Figures 4 and 11, the control unit 208 electronically controls the user interface 204. As noted, the user interfac3 204 can be a touchscreen interface 204 having a passenger information selection area 280, an inventory selection area 282, a flight information selection area 284, and/or the like. An individual can make various selections through the user interface 204.

Figure 12 illustrates an internal view of a portion of the cart system 200, according to an example of the present disclosure. As noted, the housing 202 may contain one or more waste compartments 222, such as a first waste compartment 222a, a second waste compartment 222b, and a third waste compartment 222c, each of which may be configured to contain a different type of waste (such as recyclable paper, recycle aluminum, and non-recyclable waste). The sensor(s) 222 are located at or within a waste inlet chute 290 that leads to each of the waste compartments 222a, 222b, and 222c. The sorter 226 is above the waste compartments 222a, 222b, and 222c. The sorter 226 can include a moveable door, arm, or the like that is configured to direct a waste item 292 into an appropriate waste compartment 222, such as via the control unit 208 (shown in Figure 4) operating the sorter 226 based on the type of waste item detected by the sensor(s) 224.

Figure 13 illustrates a flow chart of a method for an internal cabin of a vehicle, according to an example of the present disclosure. Referring to Figures 4 and 13, the method includes showing at 400, via the user interface 204 disposed on a portion of the housing 202 having one or more wheels 228 coupled thereto, inventory of items; and allowing selection at 402, via the user interface 204, of one or more of the items of the inventory.

In at least one example, the method also includes storing, within one or more inventory compartments 212 of the housing 202, the inventory; and detecting, by one or more inventory sensors 214, the one or more items of the inventory.

In at least one example, the method also includes delivering, by the item dispensing sub-system 216, the one or more items of the inventory for presentation.

In at least one example, the method also includes sensing, by one or more waste sensors 224, a type of waste deposited into one or more waste compartments 222 of the housing 202. The method can also include automatically sorting waste into the one or more waster compartments 222.

In at least one example, the method also includes operatively coupling one or more actuators 230 to the one or more wheels 228. Further, the method can include automatically moving, by the one or more actuators 230, the cart system 200 within an internal cabin of a vehicle.

In at least one example, the method can include removing the user interface 204 from the housing 202. In at least one example, the showing may include showing, on a display screen 206 of the user interface 204, a passenger information selection area and an inventory selection area.

As described herein, examples of the present disclosure provide systems and methods for efficiently and effectively providing items to passengers aboard a vehicle during a trip. Further, examples of the present disclosure improved cart systems and methods, such as can be used within an internal cabin of a vehicle.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The scope of protection is defined by the claims.

## Claims

1. A cart system (200) for an internal cabin (100) of a vehicle, the cart system (200) comprising:
a housing (202);
one or more wheels (228) coupled to the housing (202);
a user interface (204) disposed on a portion of the housing (202), wherein the user interface (204) is configured to allow an individual to view inventory and select one or more items of the inventory;
one or more waste compartments (222); and
one or more waste sensors configured to detect a type of waste deposited into the one or more waste compartments (222).

2. The cart system (200) of claim 1, further comprising:
one or more inventory compartments (212) configured to store the inventory; and
one or more inventory sensors configured to detect the one or more items of the inventory.

3. The cart system (200) of claims 1 or 2, further comprising an item dispensing sub-system (216) configured to deliver the one or more items of the inventory for presentation to the individual.

4. The cart system (200) of claim 3, wherein the item dispensing sub-system (216) comprises one or more actuators (218) operatively coupled to one or more delivery members (220).

5. The cart system (200) of any of claims 1-4, further comprising a sorter (226) configured to automatically sort waste into the one or more waster compartments.

6. The cart system (200) of any of claims 1-5, further comprising one or more actuators (218) operatively coupled to the one or more wheels (228).

7. The cart system (200) of claim 6, wherein the one or more actuators (218) are configured to automatically move the cart system (200) within the internal cabin (100).

8. The cart system (200) of any of claims 1-7, wherein the user interface (204) is removably coupled to the housing (202).

9. The cart system (200) of any of claims 1-8, wherein the user interface (204) comprises a display screen (206) showing a passenger information selection area and an inventory selection area.

10. A vehicle, comprising an internal cabin (100) and the cart system (200) according to any of claims 1-9 that is configured to move within the internal cabin (100).

11. The vehicle of claim 10,
the cart system (200) further comprising:
one or more actuators (218) operatively coupled to the one or more wheels (228),
one or more inventory compartments (212) configured to store the inventory;
one or more inventory sensors configured to detect the one or more items of the inventory;
an item dispensing sub-system (216) configured to deliver the one or more items of the inventory for presentation to the individual; and
a sorter (226) configured to automatically sort waste into the one or more waster compartments.

12. The vehicle of claim 11, wherein the one or more actuators (218) are configured to automatically move the cart system (200) within the internal cabin (100).

13. The vehicle of any of claims 10-12, wherein the user interface (204) is removably coupled to the housing (202).

14. The vehicle of any of claims 10-13, wherein the user interface (204) comprises a display screen (206) showing a passenger information selection area and an inventory selection area.

15. The vehicle of any of the claims 10-14, being an aircraft.

## Patentansprüche

1. Wagensystem (200) für eine Innenkabine (100) eines Fahrzeugs, das Wagensystem (200) umfassend:
ein Gehäuse (202);
ein oder mehrere Räder (228), die mit dem Gehäuse (202) gekoppelt sind;
eine Benutzerschnittstelle (204), die auf einem Teil des Gehäuses (202) angeordnet ist, wobei die Benutzerschnittstelle (204) konfiguriert ist, um es einer Person zu ermöglichen, einen Bestand zu sichten und einen oder mehrere Artikel des Bestands auszuwählen;
ein oder mehrere Abfallfächer (222); und
einen oder mehrere Abfallsensoren, die konfiguriert sind, um eine Art von Abfall zu erkennen, die in das eine oder die mehreren Abfallfächer (222) eingeworfen wird.

2. Wagensystem (200) nach Anspruch 1, ferner umfassend:
ein oder mehrere Bestandsfächer (212), die konfiguriert sind, um den Bestand aufzubewahren; und
einen oder mehrere Bestandssensoren, die konfiguriert sind, um den einen oder die mehreren Artikel des Bestands zu erkennen.

3. Wagensystem (200) nach Ansprüche 1 oder 2, ferner umfassend ein Artikelausgabe-Subsystem (216), das konfiguriert ist, um den einen oder die mehreren Artikel des Bestands für eine Überreichung an die Person auszugeben.

4. Wagensystem (200) nach Anspruch 3, wobei das Artikelausgabe-Subsystem (216) einen oder mehrere Aktuatoren (218) umfasst, die mit einem oder mehreren Ausgabeelementen (220) wirkgekoppelt sind.

5. Wagensystem (200) nach einem der Ansprüche 1 bis **4,** ferner umfassend einen Sortierer (226), der konfiguriert ist, um Abfälle in das eine oder die mehreren Abfallfächer automatisch zu sortieren.

6. Wagensystem (200) nach einem der Ansprüche 1 bis 5, ferner umfassend einen oder mehrere Aktuatoren (218), die mit dem einen oder den mehreren Rädern (228) wirkgekoppelt sind.

7. Wagensystem (200) nach Anspruch 6, wobei der eine oder die mehreren Aktuatoren (218) konfiguriert sind, um das Wagensystem (200) innerhalb der Innenkabine (100) automatisch zu bewegen.

8. Wagensystem (200) nach einem der Ansprüche 1 bis 7, wobei die Benutzerschnittstelle (204) mit dem Gehäuse (202) abnehmbar gekoppelt ist.

9. Wagensystem (200) nach einem der Ansprüche 1 bis 8, wobei die Benutzerschnittstelle (204) einen Anzeigebildschirm (206) umfasst, der einen Auswahlbereich für Passagierinformationen und einen Bestandsauswahlbereich einblendet.

10. Fahrzeug, umfassend eine Innenkabine (100) und das Wagensystem (200) nach einem der Ansprüche 1 bis 9, das konfiguriert ist, um sich innerhalb der Innenkabine (100) zu bewegen.

11. Fahrzeug nach Anspruch 10,
das Wagensystem (200) ferner umfassend:
einen oder mehrere Aktuatoren (218), die mit dem einen oder den mehreren Rädern (228) wirkgekoppelt sind,
ein oder mehrere Bestandsfächer (212), die konfiguriert sind, um den Bestand aufzubewahren;
einen oder mehrere Bestandssensoren, die konfiguriert sind, um den einen oder die mehreren Artikel des Bestands zu erkennen;
ein Artikelausgabe-Subsystem (216), das konfiguriert ist, um den einen oder die mehreren Artikel des Bestands für die Überreichung an die Person auszugeben; und
einen Sortierer (226), der konfiguriert ist, um den Abfall in das eine oder die mehreren Abfallfächer automatisch zu sortieren.

12. Fahrzeug nach Anspruch 11, wobei der eine oder die mehreren Aktuatoren (218) konfiguriert sind, um das Wagensystem (200) innerhalb der Innenkabine (100) automatisch zu bewegen.

13. Fahrzeug nach einem der Ansprüche 10 bis 12, wobei die Benutzerschnittstelle (204) mit dem Gehäuse (202) abnehmbar gekoppelt ist.

14. Fahrzeug nach einem der Ansprüche 10 bis 13, wobei die Benutzerschnittstelle (204) einen Anzeigebildschirm (206) umfasst, der einen Auswahlbereich für Passagierauswahlinformationen und einen Bestandsauswahlbereich einblendet.

15. Fahrzeug nach einem der Ansprüche 10 bis 14, das ein Luftfahrzeug ist.

## Revendications

1. Système de chariot (200) pour une cabine interne (100) d'un véhicule, le système de chariot (200) comprenant :
un boîtier (202) ;
une ou plusieurs roues (228) accouplées au boîtier (202) ;
une interface utilisateur (204) disposée sur une partie du boîtier (202), dans lequel l'interface utilisateur (204) est configurée pour permettre à un individu de visualiser des stocks et de sélectionner un ou plusieurs articles des stocks ;
un ou plusieurs compartiments à déchets (222) ; et
un ou plusieurs capteurs de déchets configurés pour détecter un type de déchets déposés dans le ou les compartiments à déchets (222).

2. Système de chariot (200) selon la revendication 1, comprenant en outre :
un ou plusieurs compartiments de stocks (212) conçus pour stocker les stocks ; et
un ou plusieurs capteurs de stocks configurés pour détecter le ou les articles des stocks.

3. Système de chariot (200) selon les revendications 1 ou 2, comprenant en outre un sous-système de distribution d'article (216) configuré pour distribuer le ou les articles des stocks pour une présentation à l'individu.

4. Système de chariot (200) selon la revendication 3, dans lequel le sous-système de distribution d'article (216) comprend un ou plusieurs actionneurs (218) accouplés de manière fonctionnelle à un ou plusieurs éléments de distribution (220).

5. Système de chariot (200) selon l'une quelconque des revendications 1 à 4, comprenant en outre une trieuse (226) configurée pour trier automatiquement des déchets dans le ou les compartiments à déchets.

6. Système de chariot (200) selon l'une quelconque des revendications 1 à 5, comprenant en outre un ou plusieurs actionneurs (218) accouplés de manière fonctionnelle à la ou aux roues (228).

7. Système de chariot (200) selon la revendication 6, dans lequel le ou les actionneurs (218) sont configurés pour déplacer automatiquement le système de chariot (200) à l'intérieur de la cabine interne (100).

8. Système de chariot (200) selon l'une quelconque des revendications 1 à 7, dans lequel l'interface utilisateur (204) est accouplée de manière amovible au boîtier (202).

9. Système de chariot (200) selon l'une quelconque des revendications 1 à 8, dans lequel l'interface utilisateur (204) comprend un écran d'affichage (206) qui montre une zone de sélection d'informations de passager et une zone de sélection de stocks.

10. Véhicule, comprenant une cabine interne (100) et le système de chariot (200) selon l'une quelconque des revendications 1 à 9 qui est configuré pour se déplacer à l'intérieur de la cabine interne (100).

11. Véhicule selon la revendication 10,
le système de chariot (200) comprenant en outre :
un ou plusieurs actionneurs (218) accouplés de manière fonctionnelle à la ou aux roues (228),
un ou plusieurs compartiments de stocks (212) conçus pour stocker les stocks ;
un ou plusieurs capteurs de stocks configurés pour détecter le ou les articles des stocks ;
un sous-système de distribution d'article (216) configuré pour distribuer le ou les articles des stocks pour une présentation à l'individu ; et
une trieuse (226) configurée pour trier automatiquement des déchets dans le ou les compartiments à déchets.

12. Véhicule selon la revendication 11, dans lequel le ou les actionneurs (218) sont configurés pour déplacer automatiquement le système de chariot (200) à l'intérieur de la cabine interne (100).

13. Véhicule selon l'une quelconque des revendications 10 à 12, dans lequel l'interface utilisateur (204) est accouplée de manière amovible au boîtier (202).

14. Véhicule selon l'une quelconque des revendications 10 à 13, dans lequel l'interface utilisateur (204) comprend un écran d'affichage (206) qui montre une zone de sélection d'informations de passager et une zone de sélection de stocks.

15. Véhicule selon l'une quelconque des revendications 10 à 14, qui est un aéronef.
